# EUROPEAN PATENT SPECIFICATION

(11) **EP 1 456 728 B1**
(45) Date of publication and mention of the grant of the patent: **27.12.2006**
(21) Application number: 02803574.9
(22) Date of filing: 21.11.2002
(51) Int. Cl.: G05F 1/32, H02J 3/00

(54) **DEVICE WITH CONTROLLABLE IMPEDANCE**
EINRICHTUNG MIT STEUERBARER IMPEDANZ
APPAREIL A IMPEDANCE REGLABLE

(30) Priority: 21.11.2001 NO 20015690; 26.11.2001 US 332569 P
(43) Date of publication of application: 15.09.2004
(73) Proprietor: MAGTECH AS, 1502 Moss (NO)
(72) Inventor: HAUGS, Espen, N-1591 Sperrebotn (NO); STRAND, Frank, N-1511 Moss (NO)
(74) Representative: HOFFMANN EITLE
(86) International application number: PCT/NO2002/000434
(87) International publication number: WO 2003/044612

(56) References cited:
- WO-A-01/90835
- WO-A-94/11891
- WO-A-97/34210
- US-A- 3 757 201

## Description

The invention relates to a circuit component with a controllable impedance of the type described in International patent application publication number WO O1/90835. In the said patent application a circuit component is described comprising a body of magnetisable material, a main winding that is wound round the body about a first axis and a control winding that is wound round the body about a second axis. By altering the current in the control winding it will be possible to change the circuit component's reluctance and thereby the impedance independently of frequency variations in the circuit in which the main winding is connected.

US patent publication US 3 757 201 discloses an electric power controlling or regulating system comprising a transformer main magnet core portion which forms a first loop opening, a magnetic control core portion forming a second loop opening, a magnetically contracting and merging with said main core. The second opening is outside of and separate from the main core opening. Main primary and secondary windings are disposed on the main core portion and pass through the first opening. Control windings are disposed on the control core portion and pass through the second opening while staying free of the first opening. The magnetic flux interlinking the primary and secondary windings on the main core portion is controllable by varying the excitation of the control windings. The second core portion extends either in a plane normal to that of the first loop opening or it extends about the main core portion in the same plane as the latter and has larger dimensions so that the two loop openings are substantially in the same plane.

International patent application number WO 94/11891 discloses an inductor with variable inductance based on the principle of orthogonal magnetization, that is, control of the permeability of the magnetic material with the aid of a cross-directional control field. The inductor has a main winding which is intended for alternating current and which surrounds a tubular core wound from tape-formed magnetic material. The core is composed of a plurality of ring cores which hare stacked coaxially one above the other and which are axially divided and angularly displaced relative to each other. Axially through the core extends a control winding intended for direct current. By changing the current in the control winding, the permeability of the core is changed in its axial direction and hence also the inductance of the inductor. The eddy-current losses in the core can be considerably reduced by making the core conically tapering towards it ends or by arranging so-called flux funnels with radically bladed laminations near the ends of the core. The inductor is especially suitable for use in power plants, for example in tunable harmonic filters for high-voltage direct current.

International patent application number WO 97/34210 discloses a device for performing, individually or in combination with each other, the functions of voltage control, power factor correction, current limiting and harmonic filtering at a network, with a line voltage U₀ and a load voltage U, with the aid of a control voltage ΔU. The device comprises a controllable reactor comprising at least one control winding and at least one power winding for generating the control voltage ΔU, as well as a control unit which, via at least one power amplifier, delivers a control current Is to the control winding. The power winding is connected in series with the load and through it flows a load current I₀. A measuring member senses the magnetic flux of the controllable reactor and delivers a flux voltage VΦ proportional thereto. Via measuring members, those signals which correspond to the line voltage U₀, the load voltage U, the control voltage ΔU, the load current I₀ and the flux voltage VΦ are fed back to the control unit which, in dependence thereon, via the power amplifier(s), delivers such a control current Iₛ to the control winding that the control voltage ΔU induced in the power winding supplements the line voltage U₀ such that the relevant functions or function are/is achieved.

The invention relates to a system for controlling the impedance of a transmission line according to claim 1. Optional features of the invention are defined in the dependent claims. A major advantage of the invention is that it does not require movable parts or complicated circuits for controlling the impedance value.

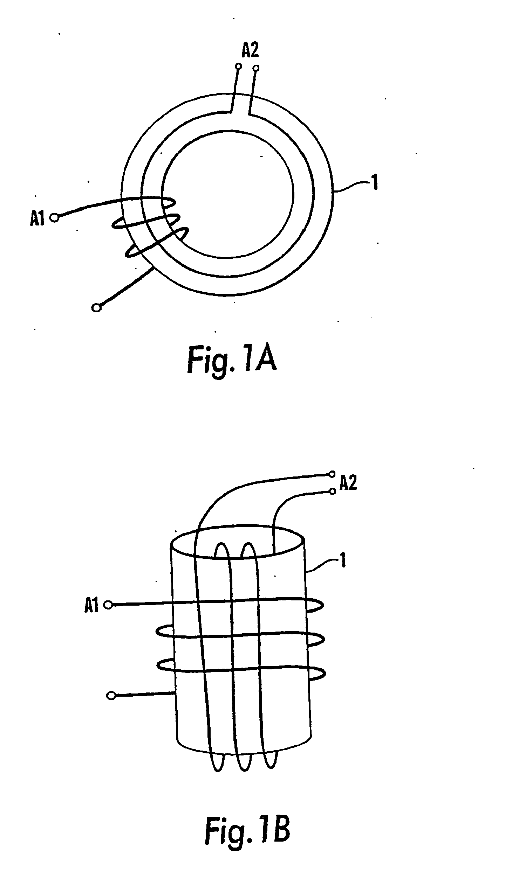

The principle behind the invention is illustrated in figure 1. In this figure there is illustrated a body 1 of a magnetisable material, which may be ferrite or iron or other suitable magnetisable materials. Around the body 1 is wound a main winding A1, which will be connected to the circuit at the point where a variable impedance requires to be introduced. A1 is wound in a first direction, which in the case illustrated in figure 1A coincides with the body's 1 circumference. A second winding, the control winding A2, is also wound around the body 1, but the winding axis is at right angles (perpendicular) to the winding axis for A1, thereby largely avoiding transformative connection between A1 and A2, with the only connection taking place within the magnetisable material. In principle the connection will be manifested as a change in the material's µᵣ. Based on the known equations: Rm = 1/µᵣµ₀A, L = N²/Rm and X_{L} = jwL, it can be seen that a change in µᵣ will lead to a change in L and thereby in X_{L}.

This characteristic of the invention is particularly useful with regard to regulation, which at the present time is carried out by means of power electronics.

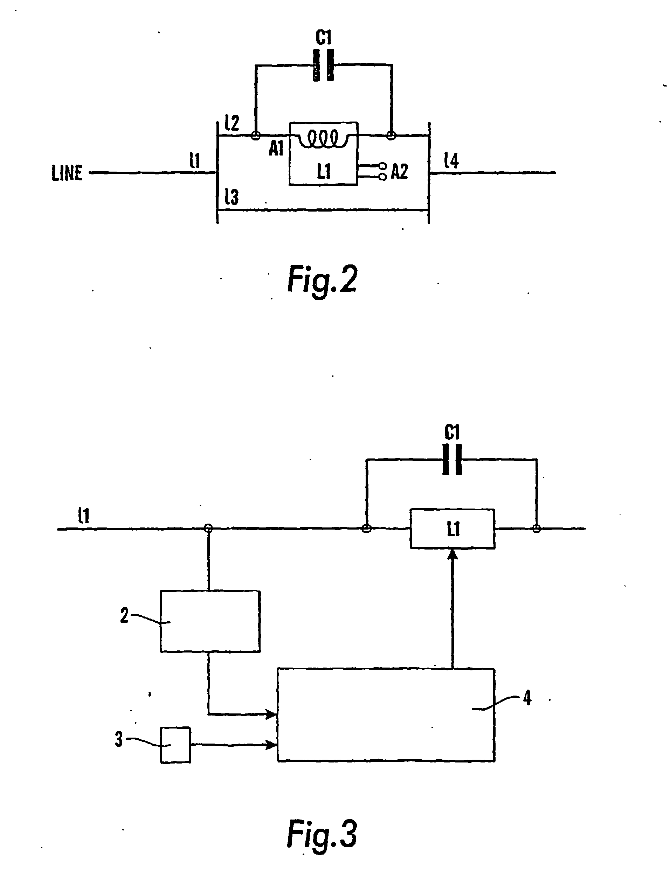

A comparative example of an implementation of the circuit component disclosed herein is for series compensation in transmission lines (figure 2). Series compensation is employed in the case of a power line 12 where connection of various equipment causes the line's total impedance to have an excessively high inductive factor. In order to compensate for the inductive factor, capacitors C1 are inserted. The component L1 will then be connected in series to the line 12 where the compensation is to be performed (i.e. the main winding A1 in the component L1 is connected in series to the line 12). At the same time the component L1 will be connected in parallel to a capacitor or a capacitor battery C1. By means of the control winding A2 in L1 it will be possible to control the component's L1 impedance from a very low value (where the current in the line 12 passes through the component L1 and not through the capacitor C1) to a high value (where the current in the line 12 largely passes through the capacitor C 1). A second application of series compensation is in order to change the impedance value for a transmission line and thereby control power flow between several parallel lines. In the case illustrated in figure 1 it will be possible by means of the component L1 to control the impedance in the line 12 and thereby the load distribution between the lines 12 and 13. According to the prior art it is possible by this means to perform load flow regulation (current limiting or redistribution of power flow) and stability control.

According to the prior art a series compensation of this kind is carried out by means of a thyristor-controlled or thyristor-connected series capacitor (CSCS, TSSC). A thyristor group and control devices are therefore required in order to activate the different thyristors. This is both cumbersome and expensive.

An embodiment of the invention comprises a measuring unit 2 for measuring parameters concerning the line's operation (U, I cos ϕ, P, Q, S, f), a processing unit with inputs and outputs where a first input is connected to the measuring unit so that the results of the measurement are transmitted to the processing unit, a second input is connected to an input unit for input of desired values, and at least one output, where the output signal is converted to a current control signal with a desired frequency (this current may be direct current or alternating current) and intensity, and a circuit component with controllable impedance comprising a main winding for connecting to the transmission line and a control winding for connecting to the processing unit, with the result that the processing unit controls the component's impedance on the basis of the ratio between the measurement results and the desired values.

A simplified block diagram of an embodiment of the invention is illustrated in figure 3. As stated, the system comprises a measuring unit 2 for connecting to a transmission line 12, which has to be series compensated, and which will measure the line's operating parameters, such as voltage, current, cos ϕ. The measured values are transmitted to a processing unit 4, which in an embodiment of the invention is also fed with desired values. Based on the input values the processing unit computes a desired value for the impedance of the component L1 and thereby the necessary control current value that will be applied to the control winding A2 in the component. Thus the embodiment constitutes a controllable series reactor that may be employed in combination with a series battery. The invention has great utilitarian value since it will lead to increased network utilisation (increased load limits) as a result of the ability to regulate power flow (in normal operation or after a fault), or as a result of increased stability limits.

With regard to the output of the circuit component, the maximum output may preferably be of the order of 3000 A, with an impedance of 10-50 ohm.

Regarding regulation requirements for the system, linear control of the series inductance will be needed. The regulating system (which in the described example is provided in the processing unit 4) should be able to follow power changes with a frequency of up to 10 Hz if the unit is to be used for stability control. If it is to be used for compensation of subsynchronous resonance it will have to be raised to 30-50 Hz.

As regards protection requirements when using the system, traditional impedance/distance protection will be replaced by "wave protection". If a series battery is used, this will result in the need for metal-oxide diverters (MOD).

As far as system losses are concerned, the stationary losses should be small but this is a minor consideration since the component's total utility value is high. One of the advantages of the system is that it involves a single component with exceptionally low operating costs.

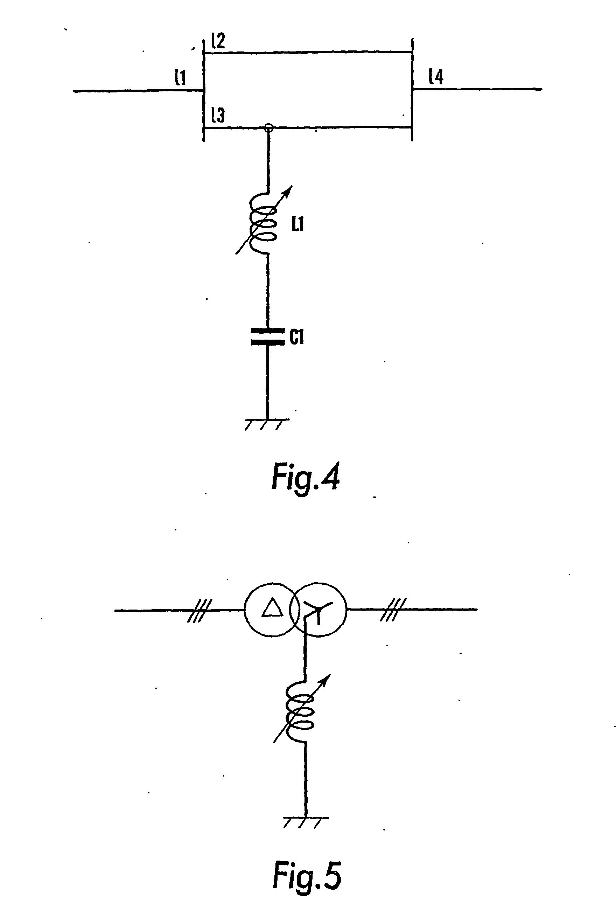

A comparative example of an implementation of the circuit component disclosed herein is as a shunt compensator in transmission lines, i.e. as a controllable shunt reactor possibly in combination with a shunt battery. According to the prior art this kind of shunt compensation is performed by means of thyristor-controlled reactors (TCR), with all the drawbacks this entails. This application is illustrated in figure 4.

According to the above comparative example, the shunt compensation is implemented by means of a circuit component L1 with a main winding A1, which is connected on one side to a transmission line 13 and on the other side is connected to a capacitor C1. The capacitor C1 in turn is connected to earth. The compensation is carried out by changing the impedance of the circuit component L1 by means of the control winding A2 and thereby changing the total impedance of the series L1-C1. The total impedance for the series connection will therefore vary from purely inductive (high value of impedance for the component L1) to zero (series resonance between L1 and C1) and thereafter to purely capacitive (low value of impedance for the circuit component L1). At the same time it will be possible to perform voltage regulation by means of this device, where an unacceptably high voltage in the line will be able to be compensated by increasing the total series impedance for the component and the capacitor and vice versa for an unacceptably low voltage.

In another embodiment, the system comprises a system for shunt compensation, with a measuring unit, a processing unit and a controllable circuit component, where the main winding A1 is arranged for connection in parallel with the transmission line 13, and where the system further comprises a capacitor or a capacitor battery C1 connected in series with the circuit component's L1 main winding A1 for shunt compensation of the transmission line 13.

The function of this embodiment of the invention will be reactive compensation and voltage regulation in the transmission line.

It will lead to increased network utilisation (increased load limits) as a result of better voltage regulation (in normal operation or after a fault) and reactive reserve, or also as a result of increased limits with regard to the voltage stability.

With regard to output for the shunt reactor, this will be of the order of 80-150MV Ar (300kV, 420kV). The requirements for regulation of the processing unit will be similar to those for an SVC unit (band width 10-20 Hz).

This system has no special protection requirements, which means that standard conductors (MOA) can be used.

As far as losses are concerned, these will correspond to or be lower than those for ordinary reactors, i.e. reactors that cannot regulate the impedance with iron core. Control current loss will come in addition (3%). It is most relevant to compare this aspect of the invention with a traditional thyristor-controlled reactor (TCR).

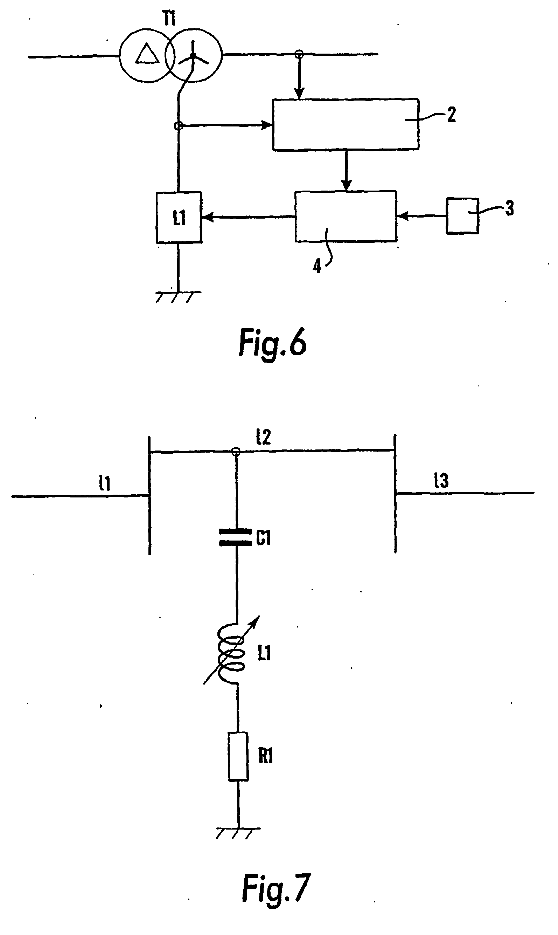

A comparative example of an implementation of the circuit component disclosed herein is for earth fault compensation. The prior art in this field comprises the use of a so-called Petersen coil for limiting earth fault current. A Petersen coil is a reactor with an iron core and air gap, which is connected between the network's neutral point and earth. Petersen coils are extremely expensive, in addition to which they have to be adjusted mechanically. The Petersen coil has to be regulated at all times to resonate with the rest of the system to which it is connected. Impedance changes in the system will therefore lead to the need for a new, mechanical adjustment of the coil. This is cumbersome and expensive, and substantially limits the use of such a coil. This comparative example is illustrated schematically in figures 5 and 6. Figure 5 illustrates a three-phase converter where the primary windings are connected in delta configuration while the secondary windings are connected in radial configuration. The circuit component L1 disclosed herein is therefore arranged between the radial configuration's zero point and earth. By changing the impedance of the circuit component L1 it will be possible to control the earth fault back or return current.

Another comparative example of an implementation of the circuit component disclosed herein is in a system for earth fault compensation i.e. for regulating earth fault impedance comprising a measuring unit 2 for measuring earth fault back or return current together with other parameters for an electrical component T1, a processing unit 4 with at least one input and one output, where the input is connected to the measuring unit 2, and in which processing unit the measurement values are compared with desired values for earth fault back current values in order to derive an output signal constituting a control current signal, and a circuit component L1 with controllable impedance with a main winding A1 for connecting between the component T1 and earth and a control winding A2 for connecting to the processing unit 4, with the result that the control current signal is fed to the control winding A2 from the processing unit 4, thereby controlling the processing unit 4 component's L1 impedance and earth fault current on the basis of the ratio between the measurement results and the desired values.

As regards the output of this system, this will preferably be up to 200 A.

This comparative example system has no special protection requirements, and the losses will not be important since the voltage across the circuit component will normally be low.

A further comparative example of an implementation of the circuit component disclosed herein is as a filter, for example as shunt or series compensation with very rapid regulation.

This rapid regulation will be achieved by simply providing a rapid change in the control current.

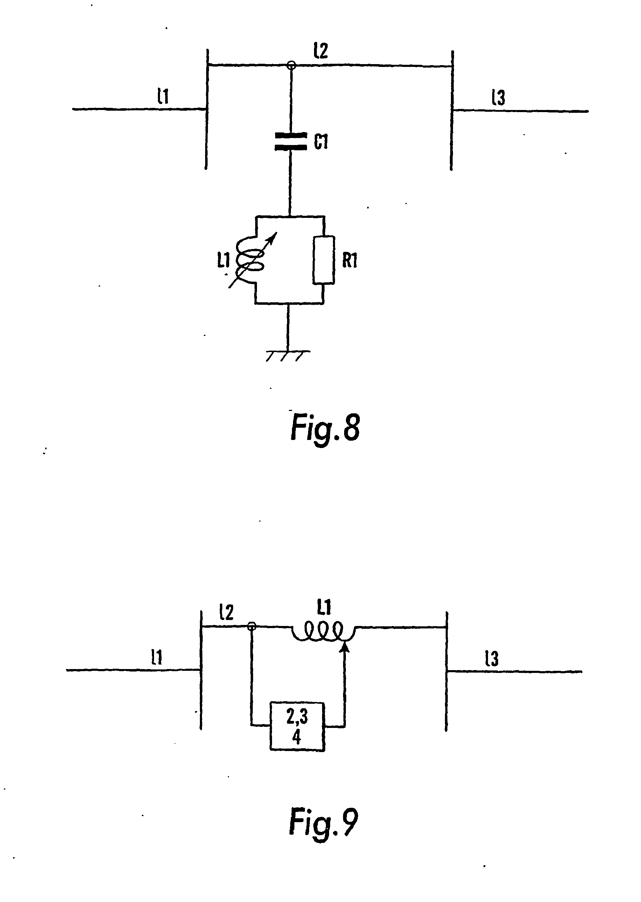

The above comparative example filter comprises a filter (figure 7 for band-pass filter, figure 8 for high-pass filter) comprising a shunt or series compensator with a main winding for connecting to the main circuit and a control winding for connecting to a control unit. By means of the control current, the circuit component included in the filter will be able to change the filter's characteristics as required simply by changing the characteristics of the control current.

Another comparative example implementing the circuit component disclosed herein is in a filter system, which comprises a filter with the circuit component, together with a measuring and a processing unit for controlling the component's inductance. The system's function will be compensation in order to reduce harmonic, phase asymmetry and flicker in addition to reactive compensation.

In the above implementation, there will be provided better voltage quality and increased reliability in HVDC converters.

As far as the output requirement is concerned, this will vary depending on where the filter has to be used, but in general it can be said that as a rule it will be of the order of 50-100 MVAr. The regulation of the system will have to be rapid, viz. preferably from milliseconds to 1/10 of a second.

Another comparative example implementing the circuit component disclosed herein is as a current limiter "generator switch", such as for example a controlled series reactor for current limiting in connection with an electrical load device. This example is illustrated in figure 9, and is similar on the whole to that illustrated in figure 3, except that the control will be exclusively conducted on the basis of desired current values. Thus the example will also comprise a current limiting system, where it will be possible to provide a switch by means of the circuit component. The switch will then be able to move from an open state (i.e. very high impedance) to a closed state (i.e. - impedance equal to zero) steplessly by means of the control current. By using such a current limiter, it will be possible to reduce the current supplied to the load device to a magnitude that can be handled by a circuit breaker. In this manner it will be possible to replace power switches (which are 20 times more expensive than circuit breakers but which on the other hand are capable of interrupting high current values) with circuit breakers in combination with such current limiters.

In this case the function of the system will be current limiting by introducing higher or lower impedance depending on the requirement.

With regard to the utilitarian value of this invention, the most important advantage will be that it will lead to a reduction in the need for switch equipment.

In this case the output requirement will be independent according to the purpose for which it is used.

As regards regulation requirements, it will not be necessary to have a closed loop for regulation.

The losses in normal "on mode" will be approximately 0 loss.

The invention will represent an alternative to an Is limiter.

We shall now present possible concrete applications of the comparative examples.

### Series reactor Flesaker-Tegneby

With regard to possible applications in the Norwegian main network, the use of the comparative example series reactor may be cited. Limits for transmission capacity from west to east in Southern Norway will often be determined by the capacity of 300 kV Flesaker-Tegneby. The reason for this is that when central lines in Eastern Norway drop out, this will lead to an increased load on the line/cable between Flesaker and Tegneby. A controllable series reactor will offer the possibility of reducing the power flow on this connection in a fault situation, thereby permitting an increase in the operative load limits in the Flesaker section.

### Traction power supply

Power fluctuations are an increasing problem for the traction power supply in Norway and in other countries employing rotating converters. The converter sets in Norway consist mainly of mechanically connected synchronous motor-synchronous generator sets that supply the traction power network with single-phase alternating voltage of approximately 15 kV and frequency equal to 16 2/3 Hz. Stability problems Associated with the converter sets are experienced more and more frequently as a result of the fact that the locomotives are becoming more powerful and more rapidly regulating.

The problem is due to an inherently poor damping in the converter sets resulting in power fluctuations on the three-phase side (the network side) and thereby a reduction in the quality of electricity. In addition the fluctuations cause increased mechanical wear on the actual sets.

A comparative example controlled series reactor in connection with the transformer that supplies the converter sets from the network side may be a very effective measure for stabilising its operation.

### Portable control unit for a variety of applications

The need for stationary control units in the network will naturally vary as a result of load changes, network development or special temporary requirements. It may also be envisaged that even though there will almost always be a need for a control unit, the best position in the network will change with time. It may therefore be difficult to defend such an investment in the network since one does not know where or for how long there will be a need for the component.

This provides the motivation for developing compact control units, which are transportable, and which have great flexibility with regard to applications. By flexible applications in this context we mean both flexibility regarding control function and connection to the network (different voltage levels, series or shunt connection, etc.).

As a specific example one may envisage a unit mounted on a semitrailer and consisting of comparative example controllable reactors, possibly in combination with a capacitor battery, and with the necessary equipment for protection and network connection. The control system must be flexible and configurable, thus enabling the unit to be used for different purposes, such as reactive compensation, active voltage regulation and voltage quality improvement or damping of power fluctuations.

Other concrete examples of applications of the disclosed circuit component will be
- Earth current compensation.
- Use as a fault current limiter. Possibility of making generator switches cheaper and smaller.

In a comparative example implementing the circuit component disclosed herein, a transformer device is provided i.e. a circuit component where there are two main windings and one, or possible two control windings, thus permitting the transformer's transformation ratio to be changed by means of one or more control current(s).

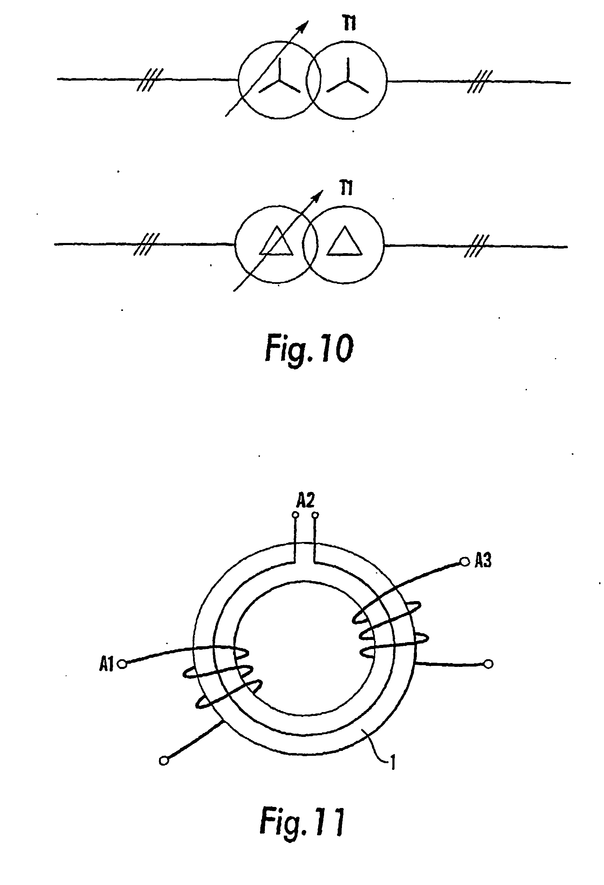

Such a transformer device is illustrated in figures 9 and 10. Figure 9 illustrates two three-phase transformers comprising adjustable circuit components. Figure 11 illustrates the principle behind this device. Around the magnetisable body 1 is an additional main winding A3 connected in such a manner that the windings A1 and A3 together with the connected body 1 form a transformer. The control winding A2 is still present and will regulate the transmission ratio of the transformer. It is also possible to wind the main windings A3 around the same axis as the control winding.

An important area of application for such a transformer will be new system for voltage regulation in connection with transformers that will replace the known automatic on-load tap changers. The function will therefore be mainly voltage regulation. The advantages of increased utilisation of transformers with a new "tap changer" are; reliability, maintenance, regulation, equally valid in all kinds of network (distribution, regional and central networks).

Amongst the advantages that will be obtained is a faster and more precise voltage regulation (simpler with coordinated control).

The output for a circuit component as implemented above will be 200-2000 A. With regard to regulation requirements, there will be no need for rapid regulation, but a regulation of the order of 10 seconds to 1 minute will suffice.

As far as the losses are concerned, these can be compared to those for other conventional transformers.

A major advantage of such transformer devices is that it will lead to much lower maintenance cost compared with today's tap changers.

As alternative solutions, i.e. solutions according to the prior art, we may mention traditional automatic tap changers.

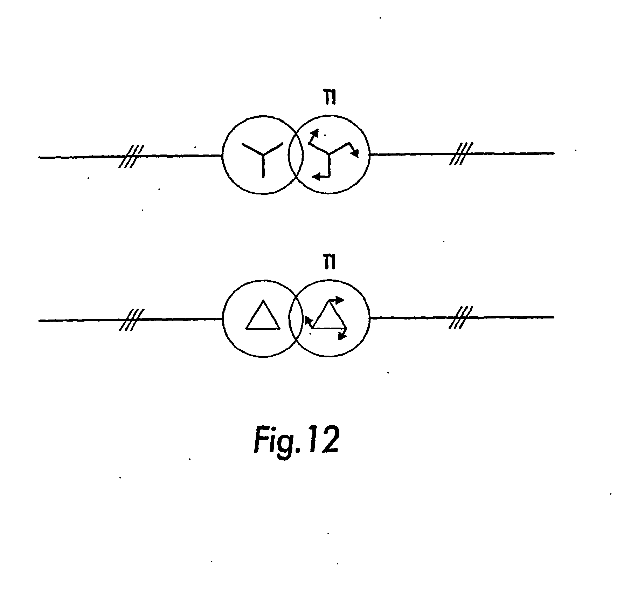

The comparative example transformer device can also be employed in connection with a phase angle regulator, which will thereby comprise a transformer component. By regulating the control current it will be possible to control the phase shift between the primary and the secondary side. A phase angle regulator of this type is illustrated in figure 12. In this case a variety of technical solutions can be envisaged, such as an adjustable series transformer (a series-connected transformer with voltage regulation). The function of the phase angle regulator will be mainly load flow regulation, and possibly stabilisation.

The introduction of the above comparative example will lead to increased network utilisation (increased load limits) as a result of the possibility for rapid regulation of load flow (in normal operation or after a fault) and improved stability.

The power transfer will be of the order of 200-1000 MVA (132kV - 420kV). Regulation will depend on the function (static power distribution or also dynamic regulation and stabilisation). For pure load flow regulation the band width requirement will be in the area of seconds (0.1 - 1 Hz).

The protection requirements will be the same as for the series compensation.

As far as losses are concerned, the stationary losses should be low, but what is acceptable for each application will be dependent on the component's total utilisation value.

A special advantage that may be mentioned in association with the above comparative example is greater flexibility in operation of the network.

The alternative solutions according to the prior art will be static series compensators (SSSC), phase distortion transformers, UPFC.

The voltage and phase angle regulator may advantageously form a part of a regulation system, where, as mentioned earlier, the system comprises a measuring unit, a processing unit and possibly a unit for manual input of desired values.

All the above-mentioned embodiments of the invention and comparative examples are particularly suitable for use on the seabed or other high-pressure locations.

## Claims

1. A system for controlling the impedance of a transmission line (12), comprising a measuring unit (2) for measuring parameters concerning the line's operation (U, I cos φ, P, Q, S, f), a processing unit (4) with at least one input and one output, wherein the input is connected to the measuring unit (2), and in which processing unit the measurement values are compared with desired operating values for the line in order to derive an output signal constituting a control current signal, and a circuit component (L1) with controllable impedance with a main winding (A1) for connection to the transmission line and a control winding (A2) for connection to the processing unit, **characterized in that** the main and control windings are wound round one and the same body at right angles to each other so that a transformative connection between the main and control windings is largely avoided and the control winding is operable to cause the relative permeability of the material of the body to change, thereby changing the impedance of the circuit component when the control current signal is fed to the control winding from the processing unit, thereby controlling the line's operation on the basis of the ratio between the measurement results and the desired values.

2. A system according to claim 1, where the desired values for the line are inputtable manually by an operator.

3. A system according to claim 1 or 2, where the main winding (A1) is arranged for connection in series with the transmission line (12) and the system further comprises a capacitor or a capacitor battery (C1) connected in parallel with the circuit component's (L1) main winding (A1) for series compensation of the transmission line (12).

4. A system according to claim 1, where the processing unit is adapted to follow power changes with a frequency of up to 10 Hz in stability control and 30-50 Hz in compensation of subsynchronous resonance.

5. A system according to claim 1 or 2, wherein the main winding (A1) is arranged for connection in parallel with the transmission line (12) and the system further comprises a capacitor or a capacitor battery (C1) connected in series with the circuit component's (L1) main winding (A1) for shunt compensation of the transmission line (12).

6. A system according to claim 5, where the processing unit is adapted for providing regulation with a bandwidth of 10-20 Hz.

7. A system according to any preceding claim, wherein the body has a through-going aperture.

8. A system according to claim 7, wherein the main winding is wound through the aperture.

## Patentansprüche

1. System zur Steuerung der Impedanz einer Übertragungsleitung (12), umfassend eine Messeinheit (2) zur Messung der Parameter, die den Betrieb der Leitung betreffen (U, I cos Φ, P, Q, S, f), eine Verarbeitungseinheit (4) mit mindestens einer Eingabe und einer Ausgabe, wobei die Eingabe mit der Messeinheit (2) verbunden ist, und in der Verarbeitungseinheit werden die Messwerte mit erwünschten Betriebswerten für die Leitung verglichen, um ein Ausgangssignal zu erlangen, das Steuerstromsignal bildet, und eine Schaltungskomponente (L1) mit steuerbarer Impedanz mit einer Hauptwicklung (A1) zur Verbindung der mit Übertragungsleitung und einer Steuerwicklung (A2) zur Verbindung mit der Verarbeitungseinheit, **dadurch gekennzeichnet, dass** die Haupt- und Steuerwicklungen rechtwinklig zueinander derart um ein und denselben Körper gewickelt sind, dass eine transformative Verbindung zwischen den Haupt- und Steuerwicklungen größtenteils vermieden wird, und die Steuerwicklung ist betriebsfähig, die Änderung der relativen Permeabilität des Materials des Körpers zu ändern, wodurch die Impedanz der Schaltungskomponente geändert wird, wenn das Steuerstromsignal von der Verarbeitungseinheit in die Steuerwicklung geführt wird, wodurch der Betrieb der Leitung auf Basis des Verhältnisses zwischen den Messergebnissen und den erwünschten Werten gesteuert wird.

2. System nach Anspruch 1, wobei die erwünschten Werte für die Leitung hauptsächlich durch einen Bediener eingegeben werden können.

3. System nach Anspruch 1 oder 2, wobei die Hauptwicklung (A1) zur Verbindung in Reihe mit der Übertragungsleitung (12) angeordnet sind und das System umfasst ferner einen Kondensator oder eine Kondensatorbatterie (C1) parallel verbunden mit der Hauptwicklung (A1) der Schaltungskomponente (L1) für Reihenausgleich der Übertragungsleitung (12).

4. System nach Anspruch 1, wobei die Verarbeitungseinheit eingerichtet ist, Leistungsänderungen mit einer Frequenz von bis zu 10 Hz bei Stabilitätssteuerung und 30-50 Hz beim Ausgleich subsynchroner Resonanz zu folgen.

5. System nach Anspruch 1 oder 2, wobei die Hauptwicklung (A1) zur Verbindung parallel mit der Übertragungsleitung (12) angeordnet sind und das System umfasst ferner einen Kondensator oder eine Kondensatorbatterie (C1) in Reihe verbunden mit der Hauptwicklung (A1) der Schaltungskomponente (L1) für Nebenanschlussausgleich der Übertragungsleitung (12).

6. System nach Anspruch 5, wobei die Verarbeitungseinheit zur Bereitstellung von Regulierung mit einer Bandbreite von 10-20 Hz eingerichtet ist.

7. System nach beliebigen der vorangegangenen Ansprüche, wobei der Körper eine durchgehende Öffnung aufweist.

8. System nach Anspruch 7, wobei die Hauptwicklung durch die Öffnung gewunden ist.

## Revendications

1. Système de contrôle de l'impédance d'une ligne de transmission (12), comprenant une unité de mesure (2) destinée à mesurer des paramètres concernant le fonctionnement de la ligne (U, I cos φ, P, Q, S, f), une unité de traitement (4) ayant au moins une entrée et une sortie, dans laquelle l'entrée est reliée à l'unité de mesure (2), et dans laquelle les valeurs de mesure sont comparées avec des valeurs de fonctionnement souhaitées pour la ligne afin de dériver un signal de sortie constituant un signal de courant de contrôle, et un composant de circuit (L1) ayant une impédance contrôlable avec un enroulement principal (A1) destiné à un raccordement à la ligne de transmission et un enroulement de contrôle (A2) destiné à un raccordement à l'unité de traitement, **caractérisé en ce que** les enroulements principal et de contrôle sont enroulés autour d'un seul et même corps à des angles droits l'un par rapport à l'autre de telle sorte qu'une liaison transformative entre les enroulements principal et de contrôle soit largement évitée et **en ce que** l'enroulement de contrôle est capable de provoquer un changement de la perméabilité relative du matériau du corps, changeant ainsi l'impédance du composant de circuit lorsque le signal de courant de contrôle est fourni à l'enroulement de contrôle par l'unité de traitement, contrôlant ainsi le fonctionnement de la ligne sur la base du rapport entre les résultats de mesure et les valeurs souhaitées.

2. Système selon la revendication 1, dans lequel les valeurs souhaitées pour la ligne sont saisissables manuellement par un opérateur.

3. Système selon la revendication 1 ou 2, dans lequel l'enroulement principal (A1) est agencé en vue d'un raccordement en série avec la ligne de transmission (12) et le système comprend en outre un condensateur ou une batterie de condensateur (C1) relié(e) en parallèle avec l'enroulement principal (A1) du composant de circuit (L1) en vue d'une compensation en série de la ligne de transmission (12).

4. Système selon la revendication 1, dans lequel l'unité de traitement est adaptée afin de suivre les changements de puissance ayant une fréquence allant jusqu'à 10 Hz en cas de contrôle de stabilité et 30 à 50 Hz en cas de compensation d'une résonance sub-synchrone.

5. Système selon la revendication 1 ou 2, dans lequel l'enroulement principal (A1) est agencé en vue d'un raccordement en parallèle avec la ligne de transmission (12) et le système comprend en outre un condensateur ou une batterie de condensateur (C1) relié(e) en série avec l'enroulement principal (A1) du composant de circuit (L1) en vue d'une compensation shunt de la ligne de transmission (12).

6. Système selon la revendication 5, dans lequel l'unité de traitement est adaptée afin d'assurer une régulation avec une bande passante de 10 à 20 Hz.

7. Système selon l'une quelconque des revendications précédentes, dans lequel le corps possède une ouverture traversante.

8. Système selon la revendication 7, dans lequel l'enroulement principal est enroulé par l'ouverture.
